# EUROPEAN PATENT SPECIFICATION

(11) **EP 1 075 158 B1**
(45) Date of publication and mention of the grant of the patent: **19.10.2005**
(21) Application number: 00305954.0
(22) Date of filing: 13.07.2000
(51) Int. Cl.: H04Q 7/38, H04B 7/26

(54) **Wireless communications system**
Drahtloses Kommunikationssystem
Système de communication sans fil

(30) Priority: 13.07.1999 US 143574 P
(43) Date of publication of application: 07.02.2001
(73) Proprietor: TEXAS INSTRUMENTS INCORPORATED, Dallas, Texas 75251 (US)
(72) Inventor: Schmidl, Timothy M., Dallas, Texas 75243 (US); Gatherer, Alan, Richardson, Texas 75082 (US); Dabak, Anand G., Plano, Texas 75025 (US)
(74) Representative: Potter, Julian Mark

(56) References cited:
- EP-A- 0 535 403
- EP-A- 0 767 557
- WO-A-98/07291
- WO-A-99/67916

## Description

The present embodiments relate to wireless communications systems and are more particularly, but not exclusively, directed to distinguishing actual cell bit sequences from likely false cell bit sequences.

Wireless communications have become very prevalent in business, personal, and other applications, and as a result the technology for such communications continues to advance in various areas. One such advancement includes the use of spread spectrum communications, including that of code division multiple access ("CDMA"). In such communications, a user station (e.g., a hand held cellular phone) communicates with a base station, where typically the base station corresponds to a "cell." More particularly, CDMA systems are characterized by simultaneous transmission of different data signals over a common channel by assigning each signal a unique code. This unique code is matched with a code of a selected user station within the cell to determine the proper recipient of a data signal.

CDMA continues to advance along with corresponding standards that have brought forth a next generation wideband CDMA ("WCDMA"). WCDMA includes alternative methods of data transfer, one being frequency division duplex ("FDD") and another being time division duplex ("TDD"). The present embodiments have particular benefit in TDD and, thus, it is further introduced here. TDD data are transmitted as quadrature phase shift keyed ("QPSK") symbols in data packets of a predetermined duration or time slot. Within a data frame having 15 of these slots, bi-directional communications are permitted, that is, one or more of the slots may correspond to communications from a base station to a user station while other slots in the same frame may correspond to communications from a user station to a base station.

Each TDD data packet includes a predetermined training sequence in the time slot, referred to in the art as a midamble, where this training sequence represents a known data pattern used for channel estimation. Specifically, the midamble includes information that is unique to a given cell and is selected from a pre-defined set of 128 different possible bit sequences; thus, the unique sequence is assigned to the given cell and that information is encoded within the midamble of data frames transmitted by stations within the corresponding cell. Conversely, data packets exchanged with respect to an adjacent cell have midambles with a different one of the bit sequence sets encoded therein and corresponding to the adjacent cell. Lastly, note that a base station in some instances may communicate with different cells (i.e., is "sectorized"); in this case, then a different and unique midamble is encoded within the data frames communicated with respect to that base station for each of the different cells. For the sake of simplicity in the remainder of this document, each base station is associated only with a single cell and, thus, in this respect, the cell's unique midamble also may be viewed as unique per the corresponding base station. In any event, the basic midamble code may be one of two lengths, where currently these lengths are described as a long basic midamble code with 456 bits and a short basic midamble code with 192 bits. While a basic midamble code consists of the same bit sequence used for communications between a base station and all user stations in the cell corresponding to that base station, each user station in the cell is distinguishable from the others because it is assigned a different time-shifted version of the basic midamble code. The assigned shifting is defined in terms of an offset in the basic midamble code, that is, each user station within the cell is assigned its own offset that represents the amount of time shift adjustment for the user station's basic midamble code. For example, with a short length midamble code thereby having a length of 192 bits, and with eight user stations communicating with one base station, the offsets for each of the eight user stations may be spaced 24 chips apart. Thus, the same basic sequence is used for all of these user stations except that for each,user station it is circularly shifted by a different multiple of 24 chips to correspond to the offset of the particular user station. After the circularly-shifted basic sequences are summed, a cyclic prefix is inserted to form a midamble of length 256 chips for a short basic midamble code and of length 512 chips for a long basic midamble code.

Two related aspects arise in connection with midambles, as explained here according to the prior art and as further addressed later in connection with the preferred embodiments. The first aspect is channel estimation and the second aspect is delay profile estimation ("DPE"). Looking first to channel estimation, in the prior art signal paths are received by a receiver at different times, referred to as different chip positions. In response to each of these paths falling within a defined time period referred to as a channel estimation window, and more particularly in response to the midamble in each path in the channel estimation window, the receiver computes a corresponding channel estimate for each path. The channel estimates may be computed using a Fourier transform applied to the entire composite signal that exists in the channel estimation window, where the composite signal is therefore a function of the midambles of any paths occurring within the window. The result of the Fourier transform presents channel estimates at each of the chip positions within the window, and the computed channel estimates are stored with references to the chip position for each estimate. Given the channel estimates, the receiver also performs DPE by noncoherently averaging channel estimates derived from the midambles over many frames, which generally therefore sums the respective absolute channel estimate values for each bit position within the channel estimation window. The DPE therefore represents the average power at each bit position over many frames, thereby attempting to average over the fades and the noise. In response to the DPE, the channel estimates corresponding to those bit positions having an average power greater than some threshold are further used by the receiver for additional signal processing, such as for developing channel estimates using a maximal ratio combining ("MRC") process.

To further appreciate the context of the preferred embodiments, an additional introduction is made with respect to receipt by a receiver of both actual paths and false paths. Specifically, recall that a midamble used in one cell is different from the midamble used in an adjacent cell. Nonetheless, a receiver may often receive paths from both a station in the cell in which the receiver is located and also paths from other stations in one or more adjacent cells. Thus, in each of the received paths, there is included either a midamble for the cell in which the receiver is located or a midamble from a different cell. Ideally, when the receiver is attempting to communicate only with other stations in the cell in which the receiver is located, then to properly determine its channel estimates it should make that determination only in response to the paths (and their corresponding midambles) from those other stations in the cell in which the receiver is located; thus, these paths are referred to as actual paths. Also in the ideal case, the receiver should disregard those paths received from transmitters of other cells, and those paths are referred to as false paths in that they represent information to the receiver that is not from the cell with which the receiver is attempting to communicate.

While the preceding aspects of channel estimates and DPE have provided a certain level of receiver performance in the prior art, it has been determined in connection with the present inventive embodiments that such operations may be improved, thereby also increasing the performance of additional operations (e.g., MRC) that rely upon these preceding operations. Specifically, it now may be noted that by identifying the paths having a relatively high average power, the DPE is in effect attempting to identify only the actual paths received, while thereby assuming that the paths having a relatively low average power are false paths. However, the present inventors have recognized that while the DPE process will eliminate some false paths which occur due to noise or fading, the DPE process may not eliminate a considerable number of other false paths. Further, this failure of the DPE has been observed to arise due to the high cross-correlation between the different midamble sequences. In other words, for the 128 different possible sequences (of either 192 or 456 bits), there is a considerable cross-correlation between various pairs of these sequences. This cross-correlation will therefore cause false paths to appear, and it is not accommodated by the prior art DPE process. As a result, in the prior art some of these false paths are accepted as actual paths by the DPE process and, thus, the channel estimates corresponding to these false paths are then used for further processing by the receiver, where such uses thereby deplete resources that are better served for processing actual paths. Again by way of example, the channel estimates corresponding to these false paths may be assigned to different fingers in a rake receiver performing MRC analysis, where those fingers would be better suited for assignment to actual path channel estimates. Thus, in the prior art there is a considerable chance for communications from adjacent cells to diminish the ability of a user station to perform its channel estimation.

International patent application publication number WO 98/07291 describes a signalling method and a digital radio system. The document relates to a method and system in a digital radio system for signalling between a base station and a subscriber terminal. The signals transmitted over the radio connection between the base station and the subscriber terminal comprise bursts consisting of symbols. The bursts comprise a known training sequence. According to the document, the training sequence is used for signalling. The document describes how it is possible to implement signalling related to the power control of the base station or the subscriber terminal, or in packet transfer, the number of bursts, packets or other data blocks.

International patent application publication number WO 99/67916 having a priority date of 25 June 1998, an International filing date of 1 June 1999 (Rule 54(3) EPC) and a publication date of 29 December 1999 describes a method for decorrelating background interference in a time-synchronised mobile communications systems. The document discloses a method and system for decorrelating background interference signals in a time-synchronised cellular system, in which a mobile station inserts a different training sequence in each successive transmitted burst. The constantly varying background interference signal environment that results can be decorrelated at base station receivers, which enhances the reception of multiple independent mobile station transmissions, and thus increases the sensitivity and precision of time-synchronisation measurements, such as, for example, time-of-arrival or time-difference-of-arrival measurements made for mobile station positioning purposes.

In view of the preceding, there is a need to improve the DPE in response to actual and false midamble basic sequences, and this need is addressed by the preferred embodiments as as disclosed by the independent claims 1, 12, 16, 28, 30, 31 and 32.

Particular and preferred aspects of the present invention are set out in the appended independent and dependent claims. In one example, there is a wireless communication system. The system comprises transmitter circuitry comprising circuitry for transmitting a plurality of frames to a receiver in a first cell. Each of the plurality of frames comprises a bit group, and the bit group distinguishes the first cell from a second cell adjacent the first cell. Preferably, the bit group uniquely distinguishes the first cell from an adjacent second cell. The transmitter circuitry further comprises circuitry for inserting a bit sequence into the bit group. The bit sequence is selected from a plurality of bit sequences such that successive transmissions by the transmitter circuitry comprise a cycle of successive ones of the plurality of bit sequences. Other circuits, systems, and methods are also disclosed and claimed.

Specific embodiments of the invention will now be described, by way of example only, and with reference to the accompanying drawings, in which:
Figure 1 illustrates a diagram of a cellular communications system by way of a contemporary code division multiple access ("CDMA") example in which the preferred embodiments may be implemented.
Figure 2 illustrates a TDD radio frame within which the preferred embodiments may be embedded.
Figure 3 illustrates a time slot within the radio frame of Figure 2.
Figure 4 illustrates a midamble structure for various users in the same cell wherein the basic sequence of the midamble is time shifted for different users.
Figure 5 illustrates a conceptual drawing of a set of paths received by a receiver.
Figure 6 illustrates a plot of the cumulative distribution of intercell rejection in response to midambles under the prior art.
Figure 7 illustrates a block diagram of the circuitry of a base station as an example of a transmitter/receiver according to the preferred embodiment.
Figure 8 illustrates a state diagram of a method for cycling midambles in cell transmissions according to the preferred embodiment.
Figures 9a through 9d illustrate an example of a receiver's channel estimates by cycling over a sequence of four midambles.
Figure 10 illustrates a plot of the cumulative distribution of intercell rejection in response to cycling midambles according to the preferred embodiment.
Figure 11 presents an additional illustration contrasting the results of actual versus false path detection between the prior art and the preferred embodiments.

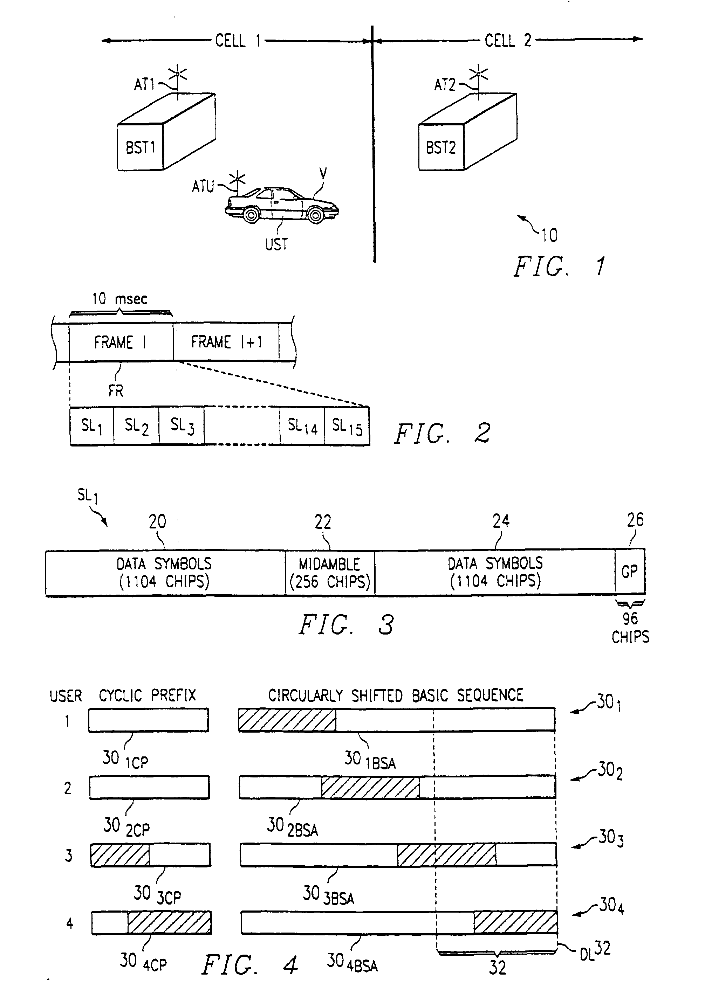

Figure 1 illustrates a diagram of a cellular communications system 10 by way of a contemporary code division multiple access ("CDMA") or wideband CDMA ("WCDMA") example in which the preferred embodiments may be implemented. Within system 10 are shown two base stations BST1 and BST2. Each base station BST1 and BST2 includes a respective antenna AT1 and AT2 from which the station may transmit or receive CDMA signals. The general area of intended reach of each base station defines a corresponding cell; thus, base station BST1 is intended generally to communicate with cellular devices within Cell 1 while base station BST2 is intended generally to communicate with cellular devices within Cell 2. Of course, some overlap between the communication reach of Cells 1 and 2 exists by design to support continuous communications should a communication station move from one cell to the other. Indeed, further in this regard, system 10 also includes a user station UST, which is shown in connection with a vehicle V to demonstrate that user station UST is mobile. Thus, vehicle V and its corresponding user station UST may move freely in and between Cell 1 and Cell 2 (or other cells). In addition, by way of example user station UST includes a single antenna ATU for both transmitting and receiving cellular communications.

In some respects, system 10 may operate according to known general techniques for various types of cellular or other spread spectrum communications, including CDMA communications. Such general techniques are known in the art and include the commencement of a call from user station UST and the handling of that call by either or both of base stations EST1 and BST2. Other techniques are ascertainable by one skilled in the art.

One aspect of operation of system 10 which is further enhanced according to the preferred embodiments, and which in various respects is also reflected in the prior art, relates to a technique known as channel estimation. Channel estimation is used by a receiver, where such a receiver could be either in user station UST of base station BST, to estimate the effects that have been imposed on a signal communicated from a transmitter. For example with respect to Figure 1, since user station UST is located within Cell 1, then as user station UST receives data frames from base station BST1, these frames are said to have arrived along communication channels, and user station UST attempts to determine the effects those channels have on the communication. By estimating these effects, the received signal or later-received signals may be processed in view of the channel estimate in an effort to remove the channel effects, thereby properly recovering the actual data transmitted by base station BST1. In a similar respect, as base station BST1 receives data frames from user station UST, base station BST1 also attempts to determine the channel effects imposed on those data frames. In any event, as described in the introductory description section of this document, channel estimation is performed in response to a midamble encoded within each data frame received by a receiver; thus, the notion of frames and midambles, both in connection with the prior art and the preferred embodiments, are further explored below.

Figure 2 illustrates a TDD radio frame FR within which the preferred embodiment midambles may be embedded, where the general timing associated with frame FR and its division into portions as described below are known in the art. Frame FR is 10 milliseconds long and is divided into 15 equal duration slots (i.e., therefore, each slot has a duration of 667 microseconds). For the sake of reference, such slots are shown in Figure 2 as SL₁ through SL₁₅, and slot SL₁ is expanded by way of an example in Figure 3 to illustrate the following further details.

Figure 3 illustrates the structure of a TDD time slot, where slot SL₁ from Figure 2 is shown by way of example. Generally, each slot, including therefore slot SL₁, is divided into what is referred to in the CDMA art as "chips." Specifically, CDMA communications are modulated using a spreading code which consists of a series of binary pulses, and each piece of CDMA signal transmitted according to this code is said to be a "chip." One current CDMA transfer rate is 3.84 Mchips/second and, thus, the 10 millisecond frame FR includes 38,400 chips (i.e., 3.84 Mchips/second*10 milliseconds = 38,400). As a result, each of the 15 slots accommodates a total of 2,560 chips (i.e., 38,400 chips/15 slots = 2,560), and each of 160 CDMA symbols within a slot is modulated with 16 chips (i.e., 2,560 chips/slot ö 1 slot/160 symbols = 16). Looking to the further breakdown of information within a time slot as illustrated by the example of time slot SL₁, it includes a first group of data symbols 20 having 1104 chips. First group 20 corresponds to 69 data symbols for an example spreading factor equal to 16. Following first group 20 in time slot SL₁ is a midamble 22 having 16 symbols for the example spreading factor equal to 16. As introduced earlier in this document, midamble 22 includes a predetermined training sequence, where this training sequence is used for purposes of channel estimation typically determined using a Fourier transform process. Thus, these midamble symbols are comparable in some respects to pilot symbols used in frequency division duplex ("FDD") systems. Following midamble 22 in time slot SL₁ is a second group of data symbols 24, also having 1104 chips. Note that the channel estimate derived from midamble 22 is preferably applied against both the first and second group of data symbols 20 and 24. Finally, second group 24 is followed in time slot SL₁ by a guard period 26. Guard period 26 has 96 chips.

Figure 4 illustrates a diagram of an embodiment of the midamble pattern that is used for channel estimation and further demonstrates the use of that pattern for multiple user stations. Specifically, Figure 4 illustrates four midambles 30₁ through 30₄ corresponding to four respective user stations in a single cell, such as for Cell 1 in Figure 1. Each midamble includes a cyclic prefix where, for sake of reference, each cyclic prefix is identified by adding a "CP" subscript to the midamble identifier (e.g., cycle prefix 30_{1CP} for midamble 30₁). Each midamble also includes a circularly shifted basic sequence area which is identified by adding a "BSA" subscript to the midamble identifier (e.g., basic sequence area 30_{1BSA} for midamble 30₁). A physical gap is shown in Figure 4 between each cyclic prefix and its basic sequence area only for the sake of illustration, where in fact it should be noted that the information for a given midamble is contiguously presented starting with the cyclic prefix and followed by information in its circularly-shifted basic sequence area. Each of these components of the midamble is further discussed below.

Each circularly shifted basic sequence area includes the cell's unique basic sequence but which is positioned in a shifted manner that is circular with respect to the basic sequence for each other user station in the same cell. To illustrate this aspect, Figure 4 depicts shading in each basic sequence area to denote the logical beginning of the sequence, where the non-shaded area is intended to illustrate the remainder of the basic sequence. For example with respect to midamble 30₁, within its basic sequence area 30_{1BSA} is its basic sequence with its beginning logically positioned to the left in the area and followed by the remainder of the basic sequence bits; in contrast, midamble 30₂ includes the same basic sequence within area 30_{2BSA}, but its shaded portion demonstrates that the beginning of the basic sequence is shifted farther in time to the right relative to basic sequence area 30_{1BSA} of midamble 30₁. The station, it is now noted further that such an alteration may be achieved by further including within block 50 a joint detector function. In this case, the joint detector provides a multi-user detection functionality which is preferred for a TDD system because the spreading factor is relatively small (e.g., 16) and so there is considerable interference from other users. Thus, the joint detector operates to cancel out interference from other users. Returning to block 50 in general, after the demodulated data are associated with their respective channels, symbol decode function 52 decodes the received symbols, for each channel and thus each conversation, into a bit stream suitable for communication to the network via physical layer interface 55 and network interface function 56.

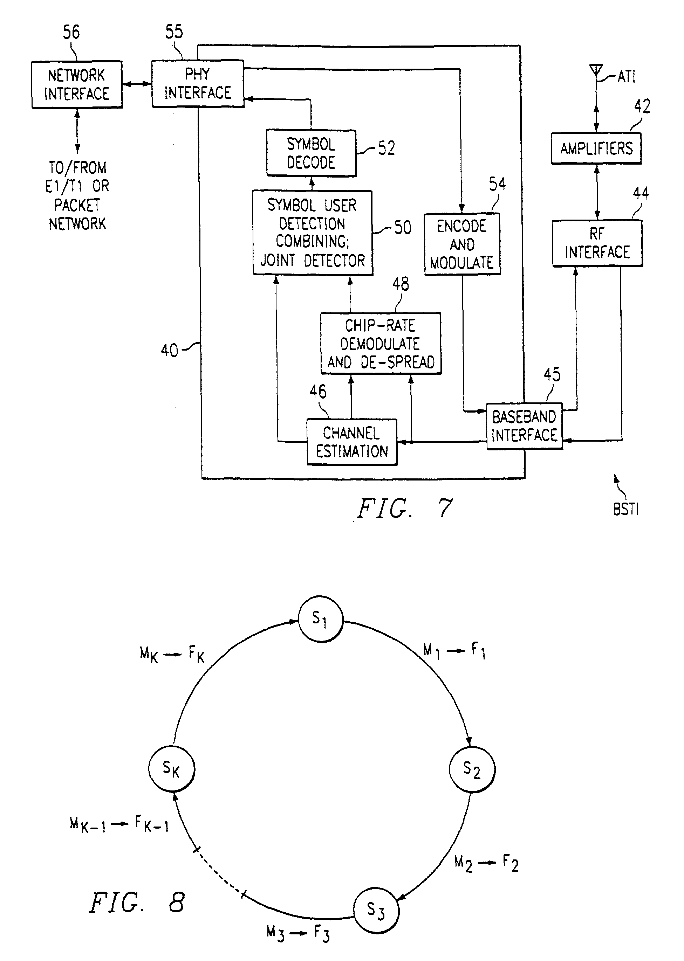

Figure 8 illustrates a state diagram of a preferred embodiment method for operating a transmitter (i.e., either in a base station EST1 or BST2 or user station UST) to cycle the midambles it includes in its transmissions. For the sake of focusing on a preferred aspect, the state diagram of Figure 8 is directed only to the insertion of midambles into frames (i.e., time slots thereof) by a transmitter, where such operations may occur via encode and modulate function 54 of Figure 7; however, one skilled in the art should appreciate that the transmitter (and its associated receiving circuitry) is also concurrently performing numerous other functions not illustrated with respect to Figure 8. Looking to the state diagram, the transmitter begins its operation in a first state S₁. Next, the operation transitions from state S₁ to state S₂, and this transition represents the formation of a first frame F₁ to be transmitted by the transmitter. Specifically, for each time slot in this first frame F₁, a first midamble M₁ is inserted into the time slot for first frame F₁ (shown in Figure 8 as M₁→F₁). Next, the operation transitions from state S₂ to state S₃, and this transition represents the formation of a second frame F₂ to be transmitted by the transmitter. For each time slot in this second frame F₂, a second midamble M₂ is inserted into the time slot for second frame F₂ (i.e., M₂→F₂). Further, the operations just described through state S₃ repeat for each additional state transition in Figure 8, whereby a final state S_{*K*} is shown representing the formation of a frame F_{*K*} where for that frame the transmitter inserts a midamble M_{*K*} into each time slot for that frame F_{*K*}.

Having described a first sequence of the states of Figure 8, attention is now directed to the next (and further successive) sequences of those states. First, after state S_{*K*} is reached and frame F_{*K*} is transmitted with midamble M_{*K*}, it may be appreciated that the midambles corresponding to frames F₁ through F_{*K*} have cycled through a respective sequence of midambles M₁ through M_{*K*}. Following the transmission of frame F_{*K*} and its midamble M_{*K*}, the flow of Figure 8 returns to state S₁. Thus, the next frame to be transmitted by the transmitter may be represented as F_{*K*+1}. For this frame, the cyclic sequence of midambles M₁ through M_{*K*} is repeated, starting therefore with the first midamble in that sequence, M₁; thus, M₁ is now inserted by the transmitter into frame F_{*K*+1}. As each additional frame is created, then each additional state is encountered so that the cycling through the midamble sequence continues, whereby midamble M₂ is inserted into frame F_{*K*+2}, midamble M₃ is inserted into frame F_{*K*+3}, and so forth until midamble M_{*K*} is inserted into frame F_{2*K*}. Finally, the state diagram of Figure 8 may repeat numerous times, where each repetition of all states corresponds to a complete cycling through the midamble sequence for the base station.

From the preceding, one skilled in the art should now appreciate that in the preferred embodiment a transmitter does not transmit only a single assigned midamble corresponding to the cell in which it is located as is the case in the prior art. Instead, in the preferred embodiment a cell is assigned a sequence of *K* midambles, and then a transmitter communicating within that cell cycles through these midambles one at a time. In the preferred embodiment, the cycling is such that a different midamble is used for each successive frame transmitted by the transmitter until all midambles in the cycle have been transmitted. Given this operation, various additional observations may be made in connection with particular implementations. As a first observation, the value of *K* in Figure 8 may be selected by one skilled in the art according to various considerations. For example, during the development of the preferred embodiment, a value of *K* on the order of 18 was explored, thereby providing a cyclic sequence of midambles having a total of 18 different midambles. More recently and as further detailed below, it has been observed as a preferred embodiment that operational improvements may be achieved over the prior art with *K* equal to a lesser number than 18, and indeed considerable benefit may be achieved with *K* equal to two or four. For an embodiment in which *K*=2, respective midambles may be selected in accordance with whether the frame number is odd or even. As a second observation, the mechanism for implementing the sequencing operation and its repetition may be selected by one skilled in the art. In one preferred embodiment approach, note that base station communications in a TDD system are synchronized to the extent that each frame includes a system frame number. Accordingly, the tracking of the change to each different midamble in the cyclic sequence of midambles may be associated with a change in the system frame number. For example, in a preferred embodiment where the cyclic sequence includes two different midambles (i.e., *K*=2), then a first midamble may be inserted into a frame and transmitted by a transmitter when the base station's system frame number is odd while a second midamble may be inserted into a frame and transmitted by a transmitter when the base station's system frame number is even. As another example, in a preferred embodiment where the cyclic sequence has more than two different midambles (i.e., *K*>2), then a modulo counter may be triggered by each increment in the base station's system frame number where each change in the counter causes a different and next successive one of the midambles in the cyclic sequence to be inserted into a frame and transmitted by a transmitter. Still other examples are ascertainable by one skilled in the art.

Having described the transmission through a cycle of midambles for a cell according to the preferred embodiment, one skilled in the art should readily appreciate that comparable operations are to be performed by a receiver within a given cell as is now briefly explored. Generally, the receiver operation parallels that of the state diagram of Figure 8, where for each successive state transition the receiver measures channel estimates in response to the midamble for the current state. For example, since midamble M₁ is transmitted in frame F₁ and is selected from a cycle of midambles in response to the system frame number, then when that frame F₁ is received then the receiver uses the same system frame number to use the same midamble M₁ to measure channel estimates, that is, to evaluate the correlation between midamble M₁ and the midambles in the received paths. Similarly, therefore, this cycling operation at the receiver continues for successive frames, again as reflected by the system frame number. Thus, when the next frame, F₂, is received by the receiver, it uses the system frame number to indicate to it that it is to use midamble M₂ to measure channel estimates. This process, therefore, continues in a circular fashion up to using midamble M_{K} for measuring channel estimates with respect to frame F_{K}, after which the process repeats with midamble M₁ and so forth.

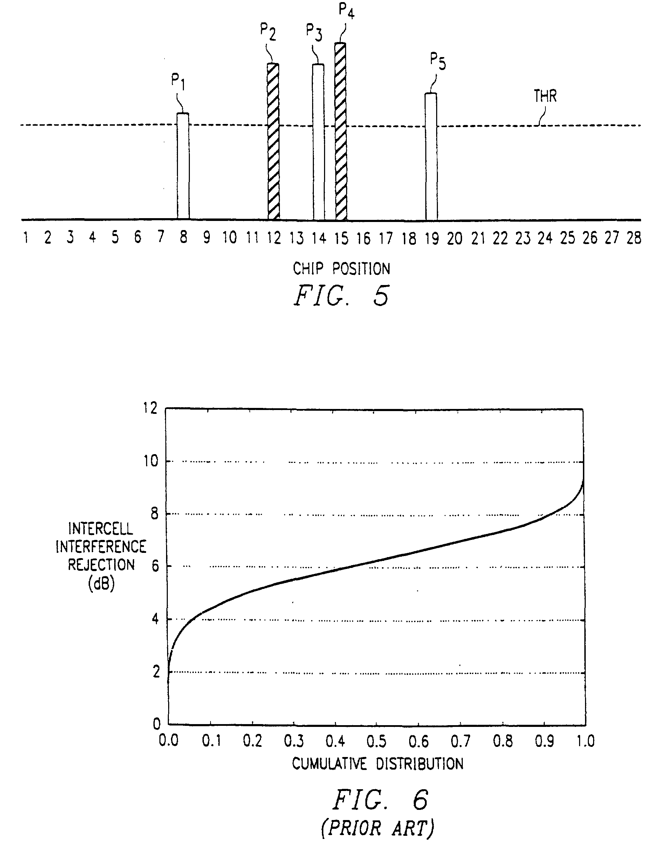

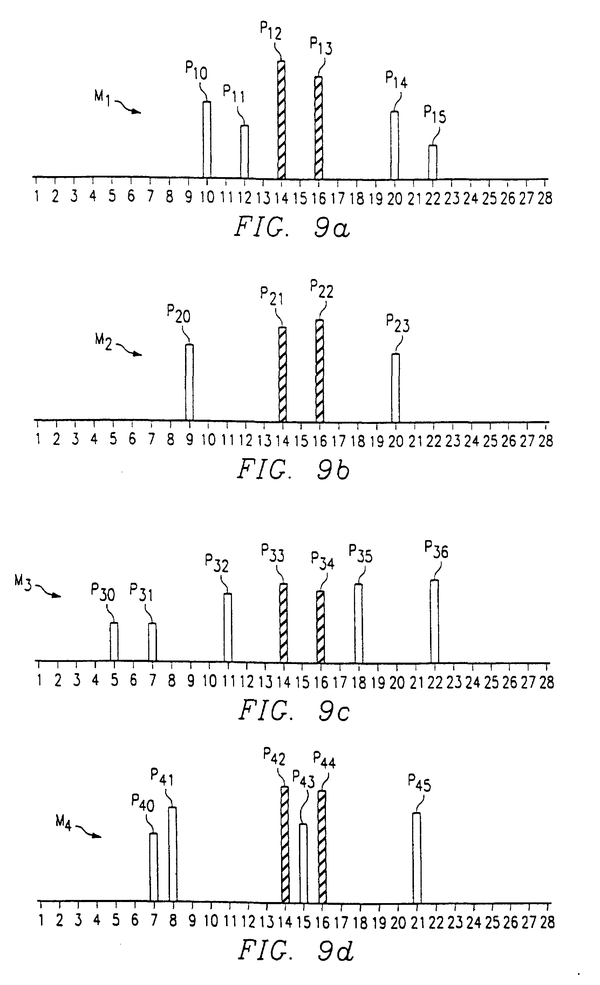

To further demonstrate the operation of a receiver in accordance with the preferred embodiment, Figures 9a through 9d depict an example of successive frames received for a system using a cycle of four midambles M₁ through M₄ (i.e., *K*=4), respectively. The general format of Figures 9a through 9d is comparable to Figure 5 in that each Figure illustrates a conceptual drawing of a number of paths detected by a receiver at the chip positions depicted, where it now be further understood with respect to the present Figures that they illustrate paths identified by the receiver performing channel estimates using the cycle of four midambles M₁ through M₄. Thus, for Figure 9a, the receiver determines channel estimates using midamble M₁ and, in response, it identifies six paths P₁₀ through P₁₅. Similarly, for Figure 9b, the receiver determines channel estimates using midamble M₂ and, in response, it identifies four paths P₂₀ through P₂₃. Similar observations may be made with respect to Figure 9c where paths P₃₀ through P₃₆ are identified in response to a channel estimate based on midamble M₃ and with respect to Figure 9d where paths P₄₀ through P₄₅ are identified in response to a channel estimate based on midamble M₄.

Examining now Figures 9a through 9d as a whole, the results of the preferred embodiment of cycling midambles for signal transmission and receipt may be appreciated. More particularly, a receiver performing DPE in the preferred embodiment does so by evaluating channel estimates over successive frames using the different midambles in the cycle as described above, and then the receiver further enhances that process by identifying as actual paths those paths that appear at the same bit position for those successive frames. In other words, for each individual Figure 9a through 9d and according to the prior art, only the relative magnitude of each path provides a basis from which to attempt to distinguish an actual path from a false path. However, because the preferred embodiment uses a different midamble for successive frames, then only those paths that appear in the same bit positions over those successive frames are likely to be actual paths. To further appreciate this aspect, note in contrast that if the same midamble were used as in the prior art, then one skilled in the art would anticipate paths to exist at different positions as between Figures 9a and 9b due to the cross-correlations from one or more other midambles. However, because cycled midambles are used in the preferred embodiment, then it is much more likely that paths at the same bit position over successive frames are likely to be from strong autocorrelations for each different midamble in the cycle and, hence, such like-positioned paths are likely to reflect an actual path rather than a false path. By way of a specific example, comparing Figure 9a to Figure 9b, it may be seen that three paths occur at like chip positions, namely, paths P₁₂ and P₂₁ occur at position 14, paths P₁₃ and P₂₂ occur at position 16, and paths P₁₄ and P₂₃ occur at position 20. Various circuits may be used to identify these like-positioned paths, such as through use of a matched filter. In any event, with only the two midambles of Figures 9a and 9b, it could be predicted that each of the three paths having common bit positions are actual paths, while the remaining paths are false paths. However, by adding Figure 9c and its midamble M₃ to the analysis, it may be seen that no path is identified at position 20, while there are still two paths (i.e., paths P₃₃ and P₃₄) at position 14 and 16 for which there were paths for midambles M₁ and M₂ in Figures 9a and 9b, respectively. Indeed, finally looking to Figure 9d, once again it is seen that paths exist at positions 14 and 16 (i.e., paths P₄₂ and P₄₄). Accordingly, in the preferred embodiment the DPE of the receiver is aided by giving additional consideration to those paths at like positions and, thus, it may be concluded by the receiver after cycling through midambles M₁ through M₄ that the paths at positions 14 and 16 are actual paths (and, thus, are shaded by way of the convention of Figure 5), while the remaining paths indicated in Figures 9a through 9d are false paths (and, thus, are not shaded by way of the convention of Figure 5).

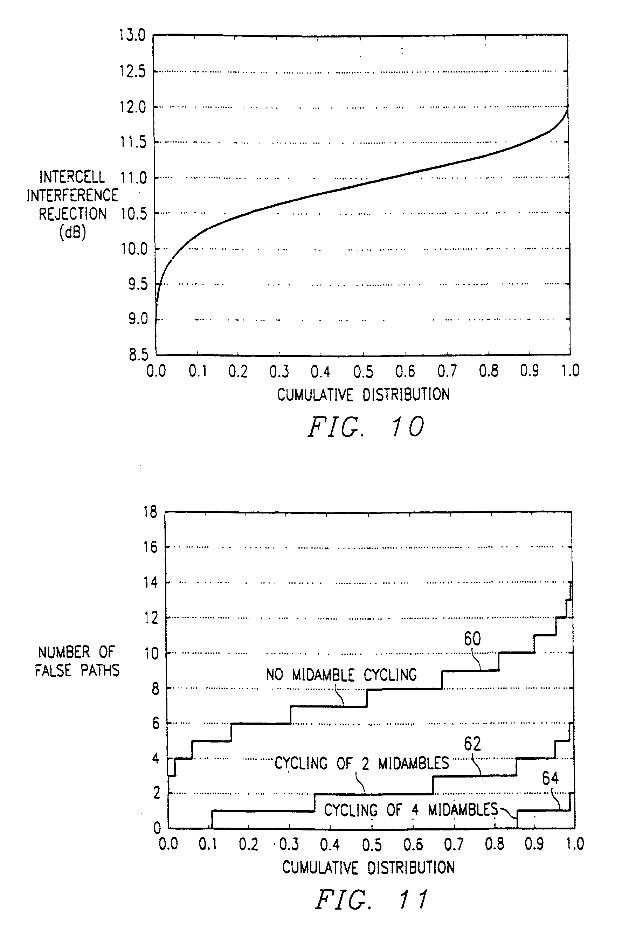

Figure 10 illustrates a plot of the cumulative distribution of intercell rejection in response to cycling midambles according to the preferred embodiment. More particularly, Figure 10 illustrates the intercell rejection for an example where *K*=18, that is, the midambles are cycled in frame transmissions over a sequence of 18 different sequences before returning again to repeat that sequence. The plot of Figure 10 therefore may be contrasted to the prior art plot of Figure 6. In Figure 10, the minimum intercell rejection is 9 dB and the median rejection is 11 dB. Thus, in general the intercell rejection is greater than that in the prior art and, therefore, there is a greater tendency to reject false paths. As a result, this allows the DPE to more accurately determine actual paths, with the improved detection of those paths thereby improving additional receiver operations.

Figure 11 presents an additional illustration contrasting the results between the prior art and the preferred embodiments as relating to actual versus false path detection. Specifically, Figure 11 illustrates a cumulative distribution of midambles, and for that distribution Figure 11 presents a plot 60 corresponding to the case of no midamble cycling, as well as a plot 62 corresponding to the case of cycling between two different midambles and a plot 64 corresponding to the case of cycling between four different midambles. The vertical axis in Figure 11 indicates the number of false paths having a value of greater than -10 dB, that is, paths below -10 dB are disregarded. Plot 60 demonstrates that if no midamble cycling is performed, then 50 percent of the time there are eight or more false paths that are -10 dB or stronger. In contrast, plot 62 demonstrates that if midamble cycling is performed per Figure 8 and using only two midambles (i.e., *K*=2), then far fewer number of false paths occur as compared to plot 60. Still further, plot 64 demonstrates that if midamble cycling is performed per Figure 8 and using four midambles (i.e., *K*=4), then more than 85 percent of the time there are no false paths detected.

From the above, it may be appreciated that the above embodiments provide a transmitter for use in a wireless system and for cycling midambles to improve intercell rejection.

In addition, still other changes may be made to the inventive teachings. For example, the transmitter of Figure 7 is only one of many transmitter embodiments which may cycle midambles according to the teachings of this document. As another example, while midambles have been shown to be cycled on a per frame basis, in an alternative embodiment they may be cycled according to some other grouping of data (e.g., per time slot, per multiple frames). As another example, while the preferred embodiment has been described in the context of a TDD CDMA implementation, other wireless systems such as time division multiple access ("TDMA") also may benefit from the present teachings. As yet another example, while a midamble has been shown as a preferred group of bits that may be cycled, other sets of bits that are unique to a cell may well be identified by one skilled in the art as having undesirable cross correlations so that as an improvement the bit sets may be cycled through a sequence of two or more alternative bit sets so as to reduce the cross correlations and any negative results arising from those cross correlations. From the above, therefore, one skilled in the art should further appreciate the inventive scope as defined by the following claims.

In particular, with reference to the appended claims, features from dependent claims may be combined with those of the independent claims and features from respective independent claims may be combined in any appropriate manner and not merely in the specific combinations enumerated in the claims.

Insofar as embodiments of the invention described above are implementable, at least in part, using a software-controlled programmable processing device such as a Digital Signal Processor, microprocessor or other processing device, it will be appreciated that a computer program for configuring the programmable device to implement the foregoing described methods is envisaged as an aspect of the present invention. The computer program may be embodied as source code and undergo compilation for implementation on a processing device, or may be embodied as object code.

Suitably, the computer program is stored on a carrier medium in machine or device readable form, for example in solid-state memory or magnetic memory such as disc or tape and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

## Claims

1. A wireless communication apparatus (BST1, BST2), comprising:
circuitry for inserting a training sequence in each burst of a plurality of frames (FRI, FRI+1....), wherein the training sequences in successive frames are different and are selected according to a cyclic sequence;
circuitry for transmitting said plurality of frames to a user station;
circuitry for receiving a plurality of frames, each including a training sequence from said user station;
circuitry for performing channel estimation on each received training sequence responsive to correlation between training sequences in a known cyclic sequence of training sequences inserted at said user station and the training sequences in said received plurality of frames; and **characterised by**
circuitry for identifying paths in the received plurality of frames as actual paths in response to a comparison of path positions resulting from said successive correlations.

2. The apparatus of claim 1, wherein each of the plurality of frames comprises a midamble (22) comprising the training sequence for that frame.

3. The apparatus of claim 2, wherein the midambles's sequence of bits consists of two bits sequences.

4. The apparatus of claim 2 or 3, wherein each of the plurality of frames has a corresponding system frame number; and
wherein the sequence of bits is selected from a plurality of bit sequences in response to the system frame number.

5. The apparatus of claim 4 wherein the sequence of bits is selected from the plurality of bit sequences in response to whether the system frame number is odd or even.

6. The apparatus of claim 2, wherein the sequence bits consists of four bit sequences.

7. The apparatus of any preceding claim, wherein each of the plurality of frames comprises a midamble comprising the bit group for that frame and wherein the circuitry for transmitting comprises CDMA transmitter circuitry.

8. The apparatus of claim 6, wherein each of the plurality of frames has a corresponding system frame number; and
wherein each sequence of bits is selected from the plurality of sequences in response to the system frame number.

9. The apparatus of claim 8, wherein the circuitry for transmitting comprises CDMA transmitter circuitry.

10. The apparatus of any one of claims 1 to 6 or 8, wherein the circuitry for transmitting comprises TDMA transmitter circuitry.

11. The apparatus of claim 1, wherein the circuitry for identifying paths in the plurality of frames as actual paths identifies, as actual paths, in response to those paths in the plurality of frames having a like chip position in the successive correlations.

12. A wireless communication system, comprising:
receiver circuitry comprising circuitry for receiving a plurality of frames (FR1, FRI+1....) from a transmitter (UST) in a first cell (CELL1);
wherein each of the plurality of frames comprises a plurality of slots (SL₁, SL₂,....SL₁₅), a sequence of bits within each of said slots distinguishing the first cell from a second cell (CELL2) adjacent the first cell;
wherein each of the sequence of bits further comprises a training sequence wherein the training sequences in successive frames are different and are selected according to cyclic sequence; and **characterised by**
wherein each of the sequence of bits further comprises a training sequence wherein the training sequences in successive frames are different and are selected according to cyclic sequence; and
wherein the receiver circuitry further comprises circuitry for comparing the training sequences in successive received frames to the known training sequences in the cyclic sequence to identify paths in the plurality of frames as actual paths.

13. The system of claim 12, wherein the circuitry for identifying paths identifies paths as actual paths in response to paths in the plurality of frames having a like chip position.

14. The system of claim 12 or 13, wherein each of the plurality of slots comprises a midamble comprising the training sequence for that frame.

15. The system of claim 14, wherein the sequence of bits consists of two groupings of bits.

16. A method of operating a wireless communication system, comprising the steps of:
transmitting a plurality of frames (FRI, FRI+1...) by transmitter circuitry to a receiver (UST) in a first cell (CELL1);
wherein each of the plurality of frames comprises plurality of slots (SL₁, SL₂ ....SL₁₅), a sequence of bits within each of said slots distinguishing the first cell from a second cell (CELL2) adjacent the first cell;
wherein the sequence of bits uniquely distinguishes the first cell from a second cell adjacent the first cell; and **characterised by**
wherein the transmitting step comprises inserting a training sequence in the sequence of bits wherein the training sequences in successive frames are different and are selected according to a cyclic sequence; such that a received can compare the training sequences in successive receiver frames to the known training sequences in the cyclic sequence to identify paths in the plurality of frames as actual paths.

17. The method of claim 16, wherein each of the plurality of frames comprises a midamble (22) comprising the training sequence for that frame.

18. The method of claim 17, wherein the midamble's sequence of bits consists of two bit sequences.

19. The method of any one of claims 16 to 18, wherein each of the plurality of frames has a corresponding system frame number; and
wherein the sequence of bits is selected from a plurality of bit sequences in response to the system frame number.

20. The method of claim 19, wherein the sequence of bits is selected from the plurality of bit sequences in response to whether the system frame number is odd or even.

21. The method of claim 16 or 17, wherein the sequence of bits consist of four bit sequences.

22. The method of any one of claims 16 to 21, wherein each of the plurality of frames comprises a midamble comprising the training sequence for that frame and wherein the transmitter circuitry comprises CDMA transmitter circuitry.

23. The method of claim 21, wherein each of the plurality of frames has a corresponding system frame number; and
wherein each sequence of bits is selected from the plurality of bit sequences in response to the system frame number.

24. The method of claim 23, wherein the transmitter circuitry comprises CDMA transmitter circuitry.

25. The method of any one of claims 16 to 21 or 23, wherein the transmitter circuitry comprises TDMA transmitter circuitry.

26. The method of any one of claims 16 to 25, further comprising the steps of:
receiving the plurality of frames at a receiver station in the first cell; and identifying paths in the plurality of frames as actual paths in response to a comparison of path positions resulting from successive measures between successive ones of the plurality of training sequences in the cyclic sequence and the training sequence in each of the plurality of frames.

27. The method of claim 26, further comprising applying channel estimates corresponding to the actual paths to a maximal ratio combiner circuit.

28. A method of operating a wireless communication system, comprising the steps of:
receiving a plurality of frames (FRI, FRI+1....) from a transmitter (UST) in a first cell (CELL1);
wherein each of the plurality of frames comprises plurality of slots (SL₁, SL₂ ....SL₁₅), a sequence of bits within each of said slots distinguishing the first cell from a second cell (CELL2) adjacent the first cell;
wherein the sequence of bits distinguishes the first cell from a second cell adjacent the first cell;
wherein the sequence of bits comprises a training sequence wherein the training sequences in successive frames are different and are selected according to a cyclic sequence; and **characterised by**
comparing the training sequences in successive received frames to the known training sequences in the cyclic sequence to identify paths in the plurality of frames as actual paths.

29. The method of claim 28, wherein the identifying step comprises identifying paths as actual paths in response to paths in the plurality of frames have a like chip position.

30. A computer program in machine or device readable form for configuring a programmable device to implement a method of operating a wireless communication system, comprising the steps of:
transmitting a plurality of frames (FRI, FRI+1...) by transmitter circuitry to a receiver (UST) in a first cell (CELL1);
wherein each of the plurality of frames comprises plurality of slots (SL₁, SL₂ ....SL₁₅), a sequence of bits within each of said slots distinguishing the first cell from a second cell (CELL2) adjacent the first cell;
wherein the sequence of bits uniquely distinguishes the first cell from a second cell adjacent the first cell; and **characterised by**
wherein the transmitting step comprises inserting a training sequence in the sequence of bits wherein the training sequences in successive frames are different and are selected according to a cyclic sequence, such that a receiver can compare the training sequences in successive received frames to the known training sequences in the cyclic sequence to identify paths in the plurality of frames as actual paths.

31. A computer program in machine or device readable form and convertible for configuring a programmable device to implement a method of operating a wireless communication system, comprising the steps of:
receiving a plurality of frames (FRI, FRI+1...) from a transmitter (UST) in a first cell (CELL1);
wherein each of the plurality of frames comprises plurality of slots (SL₁, SL₂ ....SL₁₅), a sequence of bits within each of said slots distinguishing the first cell from a second cell (CELL2) adjacent the first cell;
wherein the sequence of bits distinguishes the first cell from a second cell adjacent the first cell and further wherein the sequence of bits comprises a training sequence wherein the training sequences in successive frames are different and are selected according to a cyclic sequence; and **characterised by**
comparing the training sequences in successive frames to the known training sequences in the cyclic sequence to identify paths in the plurality of frames as actual paths.

32. A carrier medium carrying a computer program according to claim 30 or 31.

## Patentansprüche

1. Vorrichtung (BST1, BST2) für drahtlose Kommunikation, mit:
einer Schaltungsanordnung zum Einfügen einer Trainingsfolge in jeden Burst aus mehreren Rahmen (FRI, FRI+1, ...), wobei die Trainingsfolgen in aufeinander folgenden Rahmen verschieden und entsprechend einer zyklischen Folge ausgewählt sind;
einer Schaltungsanordnung zum Übertragen der mehreren Rahmen an eine Anwenderstation;
einer Schaltungsanordnung zum Empfangen mehrerer Rahmen, wovon jeder eine Trainingsfolge enthält, von der Anwenderstation;
einer Schaltungsanordnung zum Ausführen einer Kanalschätzung an jeder empfangenen Trainingsfolge in Reaktion auf eine Korrelation zwischen Trainingsfolgen in einer bekannten zyklischen Folge von Trainingsfolgen, die bei der Anwenderstation eingefügt werden, und den Trainingsfolgen in den mehreren empfangenen Rahmen; und
einer Schaltungsanordnung zum Identifizieren von Pfaden in den mehreren empfangenen Rahmen als aktuelle Pfade in Reaktion auf einen Vergleich von Pfadpositionen, die sich aus den aufeinander folgenden Korrelationen ergeben.

2. Vorrichtung nach Anspruch 1, bei der jeder der mehreren Rahmen einen Mittelteil (22) aufweist, der die Trainingsfolge für diesen Rahmen enthält.

3. Vorrichtung nach Anspruch 2, bei der die Folge von Bits des Mittelteils aus zwei Bitfolgen besteht.

4. Vorrichtung nach Anspruch 2 oder 3, bei der jeder der mehreren Rahmen eine entsprechende Systemrahmennummer besitzt; und
bei der die Folge von Bits aus mehreren Bitfolgen in Reaktion auf die Systemrahmennummer ausgewählt wird.

5. Vorrichtung nach Anspruch 4, bei der die Folge von Bits aus den mehreren Bitfolgen in Reaktion darauf ausgewählt wird, ob die Systemrahmennummer ungeradzahlig oder geradzahlig ist.

6. Vorrichtung nach Anspruch 2, bei der die Folge von Bits aus vier Bitfolgen besteht.

7. Vorrichtung nach einem vorhergehenden Anspruch, bei der jeder der mehreren Rahmen einen Mittelteil aufweist, der die Bitgruppe für diesen Rahmen enthält, und bei der die Übertragungsschaltungsanordnung eine CDMA-Senderschaltungsanordnung enthält.

8. Vorrichtung nach Anspruch 6, bei der jeder der mehreren Rahmen eine entsprechende Systemrahmennummer hat; und
bei der jede Folge von Bits aus den mehreren Folgen in Reaktion auf die Systemrahmennummer ausgewählt wird.

9. Vorrichtung nach Anspruch 8, bei der die Übertragungsschaltungsanordnung eine CDMA-Senderschaltungsanordnung enthält.

10. Vorrichtung nach einem der Ansprüche 1 bis 6 oder 8, bei der die Übertragungsschaltungsanordnung eine TDMA-Senderschaltungsanordnung enthält.

11. Vorrichtung nach Anspruch 1, bei der die Schaltungsanordnung zum Identifizieren von Pfaden in den mehreren Rahmen als aktuelle Pfade in Reaktion auf jene Pfade in den mehreren Rahmen, die in den aufeinander folgenden Korrelationen die gleiche Chipposition besitzen, als aktuelle Pfade identifiziert.

12. System zur drahtlosen Kommunikation, mit:
einer Empfängerschaltungsanordnung, die eine Schaltungsanordnung zum Empfangen mehrerer Rahmen (FRI, FRI + 1, ...) von einem Sender (UST) in einer ersten Zelle (CELL1) umfasst;
wobei jeder der mehreren Rahmen mehrere Schlitze (SL₁, SL₂, ..., SL₁₅) enthält, wobei eine Folge von Bits in jedem der Schlitze die erste Zelle von einer an die erste Zelle angrenzenden zweiten Zelle (CELL2) unterscheidet;
wobei jede Folge von Bits ferner eine Trainingsfolge enthält, wobei die Trainingsfolgen in aufeinander folgenden Rahmen verschieden und entsprechend einer zyklischen Folge ausgewählt sind; und
wobei die Empfängerschaltungsanordnung ferner eine Schaltungsanordnung umfasst, um die Trainingsfolgen in aufeinander folgenden empfangenen Rahmen mit den bekannten Trainingsfolgen in der zyklischen Folge zu vergleichen, um Pfade in den mehreren Rahmen als aktuelle Pfade zu identifizieren.

13. System nach Anspruch 12, bei dem die Schaltungsanordnung zum Identifizieren von Pfaden Pfade als aktuelle Pfade in Reaktion auf Pfade in den mehreren Rahmen, die eine gleiche Chipposition besitzen, identifiziert.

14. System nach Anspruch 12 oder 13, bei dem jeder der mehreren Schlitze einen Mittelteil aufweist, der die Trainingsfolge für diesen Rahmen enthält.

15. System nach Anspruch 14, bei dem die Folge von Bits aus zwei Bitgruppierungen besteht.

16. Verfahren zum Betreiben eines Systems zur drahtlosen Kommunikation, das die folgenden Schritte umfasst:
Übertragen mehrerer Rahmen (FIR, FIR + 1, ...) durch eine Senderschaltungsanordnung an einen Empfänger (UST) in einer ersten Zelle (CELL1);
wobei jeder der mehreren Rahmen mehrere Schlitze (SL₁, SL₂, ..., SL₁₅) umfasst, wobei eine Folge von Bits in jedem der Schlitze die erste Zelle von einer an die erste Zelle angrenzenden zweiten Zelle (CELL2) unterscheidet;
wobei die Folge von Bits die erste Zelle von einer an die erste Zelle angrenzenden zweiten Zelle eindeutig unterscheidet; und
wobei der Übertragungsschritt das Einfügen einer Trainingsfolge in die Folge von Bits umfasst, wobei die Trainingsfolgen in aufeinander folgenden Rahmen verschieden und entsprechend einer zyklischen Folge ausgewählt werden; so dass ein Empfänger die Trainingsfolgen in aufeinander folgenden empfangenen Rahmen mit den bekannten Trainingsfolgen in der zyklischen Folge vergleichen kann, um Pfade in den mehreren Rahmen als aktuelle Pfade zu identifizieren.

17. Verfahren nach Anspruch 16, bei dem jeder der mehreren Rahmen einen Mittelteil (22) aufweist, der die Trainingsfolge für diesen Rahmen enthält.

18. Verfahren nach Anspruch 17, bei dem die Folge von Bits des Mittelteils aus zwei Bitfolgen besteht.

19. Verfahren nach einem der Ansprüche 16 bis 18, bei dem jeder der mehreren Rahmen eine entsprechende Systemrahmennummer besitzt; und
bei dem die Folge von Bits aus mehreren Bitfolgen in Reaktion auf die Systemrahmennummer ausgewählt wird.

20. Verfahren nach Anspruch 19, bei dem die Folge von Bits aus den mehreren Bitfolgen in Reaktion darauf ausgewählt wird, ob die Systemrahmennummer ungeradzahlig oder geradzahlig ist.

21. Verfahren nach Anspruch 16 oder 17, bei dem die Folge von Bits aus vier Bitfolgen besteht.

22. Verfahren nach einem der Ansprüche 16 bis 21, bei dem jeder der mehreren Rahmen einen Mittelteil aufweist, der die Trainingsfolge für diesen Rahmen enthält, und bei dem die Senderschaltungsanordnung eine CDMA-Senderschaltungsanordnung enthält.

23. Verfahren nach Anspruch 21, bei dem jeder der mehreren Rahmen eine entsprechende Systemrahmennummer besitzt; und
bei dem jede Folge von Bits aus den mehreren Bitfolgen in Reaktion auf die Systemrahmennummer ausgewählt wird.

24. Verfahren nach Anspruch 23, bei dem die Senderschaltungsanordnung eine CDMA-Senderschaltungsanordnung enthält.

25. Verfahren nach einem der Ansprüche 16 bis 21 oder 23, bei dem die Senderschaltungsanordnung eine TDMA-Senderschaltungsanordnung enthält.

26. Verfahren nach einem der Ansprüche 16 bis 25, das ferner die folgenden Schritte umfasst:
Empfangen der mehreren Rahmen bei einer Empfängerstation in der ersten Zelle; und
Identifizieren von Pfaden in den mehreren Rahmen als aktuelle Pfade in Reaktion auf einen Vergleich von aus aufeinander folgenden Messungen sich ergebenden Pfadpositionen zwischen aufeinander folgenden der mehreren Trainingsfolgen in der zyklischen Folge und der Trainingsfolge in jedem der mehreren Rahmen.

27. Verfahren nach Anspruch 26, das ferner das Anwenden von den aktuellen Pfaden entsprechenden Kanalschätzungen auf eine Maximalverhältnis-Kombiniererschaltung umfasst.

28. Verfahren zum Betreiben eines Systems für drahtlose Kommunikation, das die folgenden Schritte umfasst:
Empfangen mehrerer Rahmen (FRI, FRI + 1, ...) von einem Sender (UST) in einer ersten Zelle (CELL1);
wobei jeder der mehreren Rahmen mehrere Schlitze (SL₁, SL₂, ..., SL₁₅) enthält, wobei eine Folge von Bits in jedem der Schlitze die erste Zelle von einer an die erste Zelle angrenzenden zweiten Zelle (CELL2) unterscheidet;
wobei die Folge von Bits die erste Zelle von einer an die erste Zelle angrenzenden zweiten Zelle unterscheidet;
wobei die Folge von Bits eine Trainingsfolge enthält, wobei die Trainingsfolgen in aufeinander folgenden Rahmen verschieden und entsprechend einer zyklischen Folge ausgewählt werden; und
Vergleichen der Trainingsfolgen in aufeinander folgenden empfangenen Rahmen mit den bekannten Trainingsfolgen in der zyklischen Folge, um Pfade in den mehreren Rahmen als aktuelle Pfade zu identifizieren.

29. Verfahren nach Anspruch 28, bei dem der Identifizierungsschritt das Identifizieren von Pfaden als aktuelle Pfade in Reaktion auf Pfade in den mehreren Rahmen, die die gleiche Chipposition besitzen, umfasst.

30. Computerprogramm in einer maschinen- oder vorrichtungslesbaren Form zum Konfigurieren einer programmierbaren Vorrichtung, um ein Verfahren zum Betreiben eines Systems für drahtlose Kommunikation zu implementieren; das die folgenden Schritte umfasst:
Übertragen mehrerer Rahmen (FRI, FRI + 1, ...) durch eine Senderschaltungsanordnung an einen Empfänger (UST) in einer ersten Zelle (CELL1);
wobei jeder der mehreren Rahmen mehrere Schlitze (SL₁, SL₂, ..., SL₁₅) enthält, wobei eine Folge von Bits in jedem der Schlitze die erste Zelle von einer an die erste Zelle angrenzenden zweiten Zelle (CELL2) unterscheidet;
wobei die Folge von Bits die erste Zelle von einer an die erste Zelle angrenzenden zweiten Zelle eindeutig unterscheidet; und
wobei der Übertragungsschritt das Einfügen einer Trainingsfolge in die Folge von Bits umfasst, wobei die Trainingsfolgen in aufeinander folgenden Rahmen verschieden sind und entsprechend einer zyklischen Folge ausgewählt werden, so dass ein Empfänger die Trainingsfolgen in aufeinander folgenden empfangenen Rahmen mit den bekannten Trainingsfolgen in der zyklischen Folge vergleichen kann, um Pfade in den mehreren Rahmen als aktuelle Pfade zu identifizieren.

31. Computerprogramm in maschinen- oder vorrichtungslesbarer Form, das so konvertierbar ist, dass es eine programmierbare Vorrichtung konfiguriert, um ein Verfahren zum Betreiben eines Systems zur drahtlosen Kommunikation zu implementieren, das die folgenden Schritte umfasst:
Empfangen mehrerer Rahmen (FIR, FIR + 1, ...) von einem Sender (UST) in einer ersten Zelle (CELL1);
wobei jeder der mehreren Rahmen mehrere Schlitze (SL₁, SL₂, ..., SL₁₅) umfasst, wobei eine Folge von Bits in jedem der Schlitze die erste Zelle von einer an die erste Zelle angrenzenden zweiten Zelle (CELL2) unterscheidet;
wobei die Folge von Bits die erste Zelle von einer an die erste Zelle angrenzenden zweiten Zelle unterscheidet und wobei ferner die Folge von Bits eine Trainingsfolge enthält, wobei die Trainingsfolgen in aufeinander folgenden Rahmen verschieden sind und entsprechend einer zyklischen Folge ausgewählt werden; und
Vergleichen der Trainingsfolgen in aufeinander folgenden Rahmen mit den bekannten Trainingsfolgen in der zyklischen Folge, um Pfade in den mehreren Rahmen als aktuelle Pfade zu identifizieren.

32. Trägermedium, das ein Computerprogramm nach Anspruch 30 oder Anspruch 31 trägt.

## Revendications

1. Appareil de communication sans fil (BST1, BST2) comprenant :
des circuits destinés à insérer une séquence d'apprentissage dans chaque salve d'une pluralité de trames (FR1, FR+1,...), où les séquences d'apprentissage de trames successives sont différentes et sont sélectionnées selon une séquence cyclique ;
des circuits destinés à transmettre ladite pluralité de trames à un poste utilisateur ;
des circuits destinés à recevoir une pluralité de trames, comprenant chacune une séquence d'apprentissage provenant dudit poste utilisateur ;
des circuits destinés à effectuer une estimation de canal sur chaque séquence d'apprentissage reçue en réponse à une corrélation entre les séquences d'apprentissage d'une séquence cyclique connue de séquences d'apprentissage insérées au niveau dudit poste utilisateur, et les séquences d'apprentissage de ladite pluralité de trames reçues ; et
des circuits destinés à identifier des chemins dans la pluralité de trames reçues, en tant que chemins réels en réponse à une comparaison de positions de chemins résultant desdites corrélations successives.

2. Appareil selon la revendication 1, dans lequel chacune de la pluralité de trames comprend un synchroniseur intermédiaire (22) comprenant la séquence d'apprentissage destinée à cette trame.

3. Appareil selon la revendication 2, dans lequel la séquence de bits du synchroniseur intermédiaire se compose de deux séquences de bits.

4. Appareil selon la revendication 2 ou 3, dans lequel chacune de la pluralité de trames possède un numéro de trame de système correspondant ; et
dans lequel la séquence de bits est choisie parmi une pluralité de séquences de bits en réponse au numéro de trame du système.

5. Appareil selon la revendication 4, dans lequel la séquence de bits est choisie parmi la pluralité de séquences de bits en réponse au fait que le numéro de trame du système soit pair ou impair.

6. Appareil selon la revendication 2, dans lequel la séquence de bits se compose de quatre séquences de bits.

7. Appareil selon l'une quelconque des revendications précédentes, dans lequel chacune de la pluralité de trames comprend un synchroniseur intermédiaire comprenant le groupe de bits de cette trame, et dans lequel les circuits destinés à la transmission comprennent des circuits d'émetteur CDMA.

8. Appareil selon la revendication 6, dans lequel chacune de la pluralité de trames possède un numéro de trame de système correspondant ; et
dans lequel chaque séquence de bits est choisie parmi la pluralité de séquences en réponse au numéro de trame du système.

9. Appareil selon la revendication 8, dans lequel les circuits destinés à la transmission comprennent des circuits d'émetteur CDMA.

10. Appareil selon l'une quelconque des revendications 1 à 6 ou 8, dans lequel les circuits destinés à la transmission comprennent des circuits d'émetteur TDMA.

11. Appareil selon la revendication 1, dans lequel les circuits destinés à l'identification des chemins dans la pluralité de trames, en tant que chemins réels en tant que chemins réels, identifient en réponse aux chemins dans la pluralité de trames ayant une position comme une bribe dans les corrélations successives.

12. Système de communication sans fil, comprenant :
des circuits de récepteur comprenant des circuits destinés à recevoir une pluralité de trames (FR1, FR+1),... de la part d'un émetteur (UST) dans une première cellule (CELL 1) ;
dans lequel chacune de la pluralité de trames comprend une pluralité de tranches de temps (SL₁, SL₂, ..., SL₁₅), une séquence de bits de chacune desdites tranches de temps distinguant la première cellule d'une seconde cellule (CELL 2) adjacente à la première cellule ;
dans lequel chacune des séquences de bits comprend en outre une séquence d'apprentissage dans laquelle les séquences d'apprentissage de trames successives sont différentes et sont choisies selon une séquence cyclique ; et
les circuits de récepteur comprennent en outre des circuits destinés à comparer les séquences d'apprentissage des trames successives reçues avec les séquences d'apprentissage connues de la séquence cyclique, afin d'identifier des chemins au sein de la pluralité de trames, en tant que chemins réels.

13. Système selon la revendication 12, dans lequel les circuits destinés à identifier des chemins identifient les chemins en tant que chemins réels en réponse aux chemins de la pluralité de trames ayant une position comme une bribe.

14. Système selon la revendication 12 ou 13, dans lequel chacun de la pluralité de tranche de temps comprend un synchroniseur intermédiaire comprenant la séquence d'apprentissage de cette trame.

15. Système selon la revendication 14, dans lequel la séquence de bits se compose de deux groupes de bits.

16. Procédé de fonctionnement d'un système de communication sans fil, comprenant les étapes consistant à :
transmettre une pluralité de trames (FR1, FR+1,...) à l'aide de circuits d'émetteur à un récepteur (UST1) situé dans une première cellule (CELL 1) ;
dans lequel chacune de la pluralité de trames comprend une pluralité de tranche de temps (SL₁, SL₂, ..., SL₁₅), une séquence de bits de chacune desdites tranches de temps distinguant la première cellule d'une seconde cellule (CELL 2) adjacente à la première cellule ;
dans lequel la séquence de bits distingue uniquement la première cellule d'une seconde cellule adjacente à la première cellule ; et
dans lequel l'étape de transmission comprend l'insertion d'une séquence d'apprentissage dans la séquence de bits, où les séquences d'apprentissage de trames successives sont différentes et sont choisies selon une séquence cyclique, de telle sorte qu'un récepteur puisse comparer les séquences d'apprentissage des trames successives reçues avec les séquences d'apprentissage connues de la séquence cyclique, afin d'identifier des chemins au sein de la pluralité de trames, en tant que chemins réels.

17. Procédé selon la revendication 16, dans lequel la pluralité de trames comprend un synchroniseur intermédiaire (22) comprenant la séquence d'apprentissage de cette trame.

18. Procédé selon la revendication 17, dans lequel la séquence de bits du synchroniseur intermédiaire se compose de deux séquences de bits.

19. Procédé selon l'une quelconque des revendications 16 à 18, dans lequel chacune de la pluralité de trames possède un numéro de trame de système correspondant ; et
dans lequel la séquence de bits est choisie parmi une pluralité de séquences de bits en réponse au numéro de trame du système.

20. Procédé selon la revendication 19, dans lequel la séquence de bits est choisie parmi la pluralité de séquences de bits en réponse au fait que le numéro de trame du système soit pair ou impair.

21. Procédé selon la revendication 16 ou 17, dans lequel la séquence de bits se compose de quatre séquences de bits.

22. Procédé selon l'une quelconque des revendications 16 à 21, dans lequel chacune de la pluralité de trames comprend un synchroniseur intermédiaire comprenant la séquence d'apprentissage de cette trame, et dans lequel les circuits d'émetteur comprennent des circuits d'émetteur TDMA.

23. Procédé selon la revendication 21, dans lequel chacune de la pluralité de trames possède un numéro de trame de système correspondant ; et
dans lequel chaque séquence de bits est choisie parmi la pluralité de séquences de bits en réponse au numéro de trame du système.

24. Procédé selon la revendication 23, dans lequel les circuits d'émetteur comprennent des circuits d'émetteur CDMA.

25. Procédé selon l'une quelconque des revendications 16 à 21 ou 23, dans lequel les circuits d'émetteur comprennent des circuits d'émetteur TDMA.

26. Procédé selon l'une quelconque des revendications 16 à 25, comprenant en outre les étapes consistant à :
recevoir la pluralité de trames au niveau d'un poste récepteur dans la première cellule ; et
identifier des chemins au sein de la pluralité de trames, en tant que chemins réels, en réponse à une comparaison de positions de chemins résultant de mesures successives entre la pluralité de séquences d'apprentissage de la séquence cyclique et la séquence d'apprentissage de chacune de la pluralité de trames successives.

27. Procédé selon la revendication 26, comprenant en outre l'application d'estimations de canaux correspondant aux chemins réels à un circuit de combinaison à rapport maximal.

28. Procédé de fonctionnement d'un système de communication sans fil, comprenant les étapes consistant à :
recevoir une pluralité de trames (FR1, FR+1,...) de la part d'un émetteur (UST) dans une première cellule (CELL 1) ;
dans lequel chacune de la pluralité de trames comprend une pluralité de tranche de temps (SL₁, SL₂, ..., SL₁₅), une séquence de bits de chacun desdits tranche de temps distinguant la première cellule d'une seconde cellule (CELL 2) adjacente à la première cellule ;
dans lequel la séquence de bits distingue la première cellule d'une seconde cellule adjacente à la première cellule ;
dans lequel la séquence de bits comprend une séquence d'apprentissage dans laquelle les séquences d'apprentissage de trames successives sont différentes et sont choisies selon une séquence cyclique ; et
comparer les séquences d'apprentissage des trames successives reçues avec les séquences d'apprentissage connues de la séquence cyclique afin d'identifier des chemins au sein de la pluralité de trames, en tant que chemins réels.

29. Procédé selon la revendication 28, dans lequel l'étape d'identification comprend l'identification de chemins en tant que chemins réels en réponse aux chemins de la pluralité de trames ayant une bribe.

30. Programme informatique prévu sous une forme pouvant être lue par une machine ou un dispositif, destiné à configurer un dispositif programmable afin de mettre en oeuvre un procédé de fonctionnement d'un système de communication sans fil, comprenant les étapes consistant à :
transmettre une pluralité de trames (FR1, FR+1,...) à l'aide de circuits d'émetteur, à un récepteur (UST) situé dans une première cellule (CELL 1) ;
dans lequel chacune de la pluralité de trames comprend une pluralité de tranche de temps (SL₁, SL₂, ..., SL₁₅), une séquence de bits de chacune desdites tranches de temps distinguant la première cellule d'une seconde cellule (CELL 2) adjacente à la première cellule ;
dans lequel la séquence de bits distingue uniquement la première cellule d'une seconde cellule adjacente à la première cellule ; et
dans lequel l'étape de transmission comprend l'insertion d'une séquence d'apprentissage dans la séquence de bits, où les séquences d'apprentissage de trames successives sont différentes et sont choisies selon une séquence cyclique, de telle sorte qu'un récepteur puisse comparer les séquences d'apprentissage des trames successives reçues avec les séquences d'apprentissage connues de la séquence cyclique, afin d'identifier des chemins au sein de la pluralité de trames, en tant que chemins réels.

31. Programme informatique prévu sous une forme pouvant être lue par une machine ou un dispositif, et pouvant être transformé afin de configurer un dispositif programmable de façon à mettre en oeuvre un procédé de fonctionnement d'un système de communication sans fil, comprenant les étapes consistant à :
recevoir une pluralité de trames (FR1, FR+1,...) de la part d'un émetteur (UST) dans une première cellule (CELL 1) ;
dans lequel chacune de la pluralité de trames comprend une pluralité de tranche de temps (SL₁, SL₂, ..., SL₁₅), une séquence de bits de chacune desdites tranches de temps distinguant la première cellule d'une seconde cellule (CELL 2) adjacente à la première cellule ;
dans lequel la séquence de bits distingue la première cellule d'une seconde cellule adjacente à la première cellule, et dans lequel, en outre, la séquence de bits comprend une séquence d'apprentissage dans laquelle les séquences d'apprentissage des trames successives sont différentes et sont choisies selon une séquence cyclique ; et
comparer les séquences d'apprentissage des trames successives reçues avec les séquences d'apprentissage connues de la séquence cyclique afin d'identifier des chemins au sein de la pluralité de trames, en tant que chemins réels.

32. Moyen de support supportant un programme informatique selon la revendication 30 ou 31.
